# EUROPÄISCHE PATENTSCHRIFT

(11) **EP 2 254 923 B1**
(45) Veröffentlichungstag und Bekanntmachung des Hinweises auf die Patenterteilung: **03.10.2012**
(21) Anmeldenummer: 09718783.5
(22) Anmeldetag: 28.02.2009
(51) Int. Cl.: C08G 18/08, C08G 18/12, C08G 18/66, C08G 18/76, C09J 175/08, D06M 17/10

(54) **WÄSSRIGE DISPERSION AUS ANIONISCH MODIFIZIERTEN POLYURETHANHARNSTOFFEN ZUR BESCHICHTUNG EINES TEXTILEN FLÄCHENGEBILDES**
AQUEOUS DISPERSION OF ANIONICALLY MODIFIED POLYURETHANE UREAS FOR COATING A TEXTILE WEB MATERIAL
DISPERSION AQUEUSE DE POLYURÉTHANE-URÉES À MODIFICATION ANIONIQUE POUR ENDUCTION D'UNE STRUCTURE TEXTILE BIDIMENSIONNELLE

(30) Priorität: 14.03.2008 DE 102008014211
(43) Veröffentlichungstag der Anmeldung: 01.12.2010
(73) Patentinhaber: Bayer MaterialScience AG, 51368 Leverkusen (DE)
(72) Erfinder: GRABLOWITZ, Hans Georg, 41462 Neuss (DE); RISCHE, Thorsten, Columbus, Georgia 31909 (US); FELLER, Thomas, 42659 Solingen (DE); KLEE, Hans-Peter, 51339 Burscheid (DE); URBAN, Juergen, deceased (DE); CASSELMANN, Holger, 51519 Odenthal (DE); ZASTROW, Alfred, 41542 Dormagen (DE); MICHAELIS, Thomas, 51375 Leverkusen (DE)
(86) Internationale Anmeldenummer: PCT/EP2009/001449
(87) Internationale Veröffentlichungsnummer: WO 2009/112168

(56) Entgegenhaltungen:
- EP-A- 0 581 159
- EP-A- 0 595 149
- WO-A-99/23129
- US-A- 4 048 001

## Beschreibung

Die Erfindung betrifft ein Verfahren zum Beschichten eines textilen Flächengebildes mit einer wässrigen Polyurethanhamstoff-Dispersion. Die Erfindung betrifft ferner die Verwendung einer wässrigen Polyurethanharnstoff Dispersion zum Beschichten eines textilen Flächengebildes.

Es gehört seit längerer Zeit zum Stand der Technik, Textilien, wie Gewebe, Gewirke und Vliese, mit Lösungen von Polyurethanen nach dem Direkt- oder Umkehrverfahren zu beschichten. Die hierbei erhaltenen Artikel werden beispielsweise zur Fabrikation von Oberbekleidung, Polsterwaren, Taschen, Schuhobermaterial, Zeltplanen, Markisen und vielen anderen Produkten verwendet.

Polyurethane spielen aufgrund ihrer besonderen Eigenschaften, wie Elastizität und Kälteflexibilität, eine wichtige Rolle bei der Beschichtung von textilen Flächengebilden. Aufgrund steigender ökologischer Anforderungen werden heutzutage in zunehmendem Maße wässrige Polyurethan-Dispersionen eingesetzt, um die Lösungsmittel-Emission zu reduzieren. Ein Überblick über die verschiedenen Typen und Herstellungsprozesse ist in Houben-Weyl: "Methoden der organischen Chemie, Vol. E20, Seiten 1659 bis 1692" oder auch in "Ullmann's Encyclopaedia of Industrial Chemistry" (1992), Vol. A21, Seiten 667 bis 682 zu finden. Im Folgenden werden als Polyurethan-Dispersionen auch solche Dispersionen bezeichnet, die neben den Urethan-Gruppen auch Harnstoffgruppen aufweisen.

In der Textilbeschichtung wird sehr häufig ein Mehrschichtaufbau angewendet, um dem Produkt die gewünschten Eigenschaften zu verleihen. Gleichzeitig erfüllt jede der einzelnen Schichten eine besondere Funktion. Die Beschichtung besteht häufig aus mindestens zwei Schichten, die man im Allgemeinen auch als Striche bezeichnet. Die oberste, der Luft zugewandte Schicht wird dabei als Deckstrich bezeichnet und soll die Oberfläche möglichst robust gegen chemische und physikalische Einflüsse von außen gestalten. Dazu zählen beispielsweise Eigenschaften wie Hydrolyse- und Lösungsmittelbeständigkeit, Kratzfestigkeit, eine samtige oder glatte Oberfläche etc. Die unterste, dem Substrat zugewandte Seite, welche den Deckstrich mit dem Textil verbindet, wird auch als Haftstrich bezeichnet. Diese Schicht muss einerseits eine gute Haftung zum Textil und andererseits zum Haftstrich aufweisen. Dabei ist unter anderem eine hohe Nasshaftung des Deckstrichs erforderlich, da Textilien häufig in Kontakt mit Wasser kommen können.

Bisher wurden im Stand der Technik üblicherweise Polyurethanlösungen als Haftstrich eingesetzt. Derartige Polyurethane müssen nämlich keine internen und/oder externen hydrophilen Bausteine enthalten, was ihre Nasshaftung erhöht. Die Verwendung von organischen Lösungsmitteln ist aber aus ökonomischen und insbesondere auch aus ökologischen Gründen zunehmend unerwünscht.

Im Unterschied dazu enthalten Polyurethane, die in wässrigen Polyurethan-Dispersionen eingesetzt werden, üblicherweise hydrophile Bausteine, um die Dispergierbarkeit des Polyurethans in Wasser zu gewährleisten. Die hydrophilen Bausteine können ionisch und/oder nicht-ionisch sein. Bei Haftstrichen hat sich die Verwendung derartiger Polyurethane jedoch nicht bewährt, da die hydrophilen Bausteine zur Quellbarkeit des Polyurethans in Wasser führen und sich somit die Haftfähigkeit der Beschichtung reduziert. Dies kann schlimmstenfalls zur Delaminierung führen.

Demnach wäre es wünschenswert, Polyurethane zu erhalten, die in wässrigen Dispersionen einsetzbar sind und dennoch eine hohe Haftfähigkeit aufweisen.

Aus der US 6 713 131 B2 ist ein Verfahren zum Beschichten eines Substrats bekannt, in dem wässrige Poly(isobutylen-co-paramethylstyrol)-Emulsionen, die durch Dimethyloxysilyl-Gruppen funktionalisiert sind, zusammen mit anderen nicht-funktionellen Polyurethan-Dispersionen auf ein Polyamid aufgetragen werden. Um die silylierten Polyurethane in Wasser zu emulgieren, enthalten sie externe Emulgatoren, die eine Verminderung der Nasshaftung hervorrufen. Das Vorhandensein der externen Emulgatoren als hydrophile Bausteine bewirkt wie oben diskutiert eine die Nasshaftung beeinträchtigende Quellbarkeit des Polyurethans. Dem wird dadurch entgegengewirkt, dass die Polyurethane mit den Silylgruppen reaktive, selbstvernetzende Komponenten aufweisen, die die Nasshaftung verbessern. Nachteilig an silylierten Polyurethanen ist jedoch, dass sie kostenintensive Komponenten darstellen. Darüber hinaus werden bei ihrem Einsatz so genannte VOC (volatile organic compounds) freigesetzt - was bekanntermaßen aus ökologischen Gesichtspunkten nicht erwünscht ist.

Die WO 99152676 AI beschreibt Sulfongruppen enthaltende Polyesterurethane mit endständigen Silylgruppen. Die Polyesterurethane enthalten ebenfalls hydrophile Gruppen, sind Silylfunktionalisiert und werden als wässrige Dispersion eingesetzt. Sie finden beispielsweise als Haftstrich für Schleifbänder Verwendung. Auch die hier beschriebenen Polyurethane sind funktionelle, bei der Trocknung vernetzende Reagenzien, deren Quellbarkeit auf diese Weise kompensiert wird. Nachteilig an diesen Verbindungen ist wiederum ihr hoher Preis sowie ihre geringe Umweltverträglichkeit.

Aufgabe der vorliegenden Erfindung ist es, ein Verfahren zum Beschichten von textilen Flächengebilden bereitzustellen, in dem Polyurethane in Form einer wässrigen Dispersion eingesetzt werden und mit dem beschichtete textile Flächengebilde erhalten werden, die dennoch eine hohe Nasshaftung aufweisen. Die verwendeten Polyurethane sollen zudem kostengünstig herzustellen und umweltverträglich sein.

Diese Aufgabe wird gelöst durch ein Verfahren zum Beschichten textiler Flächengebilde, in dem eine wässrige Dispersion enthaltend anionisch modifizierte Polyurethanharnstoffe aus
A. aromatischem Diisocyanat,
B. Polyetherpolyol mit einem mittleren Molekulargewicht größer als 1500,
C. wenigstens einer 1 bis 2 isocyanatreaktive Gruppen sowie wenigstens eine ionogene Gruppe aufweisenden Verbindung,
D. Polyamin mit einem mittleren Molekulargewicht von mindestens 32 sowie
E. Wasser,
wobei die mittlere Gesamtfunktionalität der isocyanatreaktiven Verbindungen B bis D 1,85 bis 2,2 beträgt, das Molverhältnis der Isocyanatgruppen der Komponente A zu den isocyanatreaktiven Gruppen der Komponenten B bis D größer als 1 ist und die Polyurethanharnstoffe einen Gehalt von 800 bis 1500 mmol Urethangruppen/kg anionisch modifiziertem Polyurethanharnstoff und einen Gehalt von 800 bis 1800 mmol Urethan- plus Harnstoffgruppen/kg anionisch modifiziertem Polyurethanharnstoff besitzen, auf ein textiles Flächengebilde aufgebracht wird.

Die erfindungsgemäß eingesetzten Polyurethanharnstoffe sind grundsätzlich bereits aus der EP 0 581 159 B 1 bekannt. Insbesondere im Hinblick auf Struktur, Eigenschaften und Herstellung der anionisch modifizierten Poly-urethanharnstoffe wird ausdrücklich auf die Offenbarung der EP 0 581 159 B1 Bezug genommen. Diese Druckschrift beschreibt den Einsatz von wässrigen Polyurethanharnstoff-Dispersionen zur Beschichtung von Leder.

Überraschend wurde gefunden, dass die aus der EP 0 581 159 B 1 bekannten anionisch modifizierten Polyurethanharnstoffe in Form einer wässrigen Dispersion zur Beschichtung textiler Flächengebilde eingesetzt werden können, wobei die hierbei erhaltenen beschichteten textilen Flächengebilde eine hervorragende Nasshaftung zeigen. Darüber hinaus weisen die in dem erfindungsgemäßen Verfahren eingesetzten anionisch modifizierten Polyurethanharnstoffe einen niedrigen Urethan- und/oder Harnstoffgruppengehalt auf und sind bei guter Haftung weich und klebfrei. Ein weiterer Vorteil ist, dass diese Polyurethanharnstoffe dennoch eine hohe Festigkeit zeigen und dabei umweltverträglich und kostengünstig herzustellen sind.

Mit dem erfindungsgemäßen Verfahren lassen sich auf einfache Weise beschichtete textile Flächengebilde herstellen, die eine hervorragende Nasshaftung aufweisen. Besonders günstig wirkt sich der Einsatz des erfindungsgemäßen Verfahrens bei der Herstellung von Laminaten aus, die mindestens zwei Strichen umfassen. Aufgrund ihrer hervorragenden haftvermittelnden Wirkung fungiert die aus den anionisch modifizierten Polyurethanharnstoffen gebildete Schicht hierbei zweckmäßigerweise als Haftstrich.

Erfindungsgemäß können die verschiedensten textilen Flächengebilde mit den anionisch modifizierten Polyurethanharnstoffen beschichtet werden. Praktische Versuche haben gezeigt, dass sich bei der Beschichtung von Webwaren, Vliesstoffen oder Maschenware besonders gute Ergebnisse zeigen. Hervorragend eignen sich auch Vliesstoffe, die mit mikroporös ausgebildeten Koagulaten gefüllt sind.

Erfindungsgemäß weisen die zur Beschichtung verwendeten Polyurethanharnstoffe einen Gehalt von 800 bis 1800 mmol Urethan- plus Harnstoffgruppengruppen/kg anionisch modifiziertem Polyurethanharnstoff auf. Gemäß einer bevorzugten Ausführungsform der Erfindung beträgt der Gehalt an Urethan- plus Harnstoffgruppengruppen/kg anionisch modifiziertem Polyurethanharnstoff 1000 bis 1800 mmol, noch bevorzugter 1200 bis 1750 mmol und insbesondere 1400 bis 1700 mmol.

Erfindungsgemäß beträgt das Molverhältnis der Isocyanatgruppen der Komponente A zu den isocyanatreaktiven Gruppen der Komponenten B bis D mehr als 1. Gemäß einer bevorzugten Ausführungsform der Erfindung ist das Molverhältnis der Isocyanatgruppen der Komponente A zu den isocyanatreaktiven Gruppen der Komponenten B bis D größer als 1,05.

Gemäß einer weiteren bevorzugten Ausführungsform der Erfindung weisen die Polyurethanharnstoffe einen Gehalt von mehr als 150 mmol, vorzugsweise mehr als 200 mmol und insbesondere mehr als 320 mmol/g, und ganz besonders bevorzugt mehr als 360 mmol Harnstoffgruppen/kg anionisch modifiziertem Polyurethanharnstoff auf.

Nach einer weiteren bevorzugten Ausführungsform besitzen die Polyurethanharnstoffe eine Shore A -Härte von maximal 60.

Als Komponente A werden erfindungsgemäß aromatische Diisocyanate eingesetzt. Praktische Versuche haben gezeigt, dass die von W. Siefken in Justus Liebigs Annalen der Chemie, 562, Seiten 75 bis 136 beschriebenen Diisocyanate für das erfindungsgemäße Verfahren besonders geeignete aromatische Diisocyanate sind. Hervorzuheben sind insbesondere aromatische Diisocyanate oder Diisocyanatgemische mit seitenständigen Alkylgruppen, beispielsweise 2,4- und 2,6-Toluylendiisocyanate.

Hervorragende Ergebnisse erzielt man insbesondere mit 1,4-Phenylendiisocyanat, 2,4- und/oder 2,6-Toluylendiisocyanat, 1,5-Naphthylendiisocyanat, 2,4`- oder 4,4'-Diphenylmethan-diisocyanat, 1,3- und 1,4-Bis-(2-isocyanato-prop-2-yl)-benzol (TMXDI), 1,3-Bis(isocyanato-methyl)benzol (XDI).

Auch Diisocyanate mit einer Funktionalität ≥ 2 können verwendet werden. Hierzu gehören modifizierte Diisocyanate mit Uretdion-, Isocyanurat-, Urethan-, Allophanat-, Biuret-, Iminooxadiazindion- und/oder Oxadiazintrionstruktur sowie nicht-modifizierte Polyisocyanate mit mehr als 2 NCO-Gruppen pro Molekül, beispielsweise Triphenylmethan-4,4',4"-triisocyanat. Vorzugsweise werden Diisocyanate mit einer Funktionalität ≥ 2 nur anteilig eingesetzt.

Bevorzugt handelt es sich um Diisocyanate oder Diisocyanatgemische der vorstehend genannten Art mit einer mittleren Funktionalität von 2 bis 4, bevorzugt 2 bis 2,6 und besonders bevorzugt 2 bis 2,4.

Als Komponente B werden erfindungsgemäß Polyetherpolyole mit einem mittleren Molekulargewicht von mehr als 1500 eingesetzt. Die Polyetherpolyole weisen bevorzugt Molekulargewichte zwischen 1800 und 3000 auf. Ihre mittlere Funktionalität ist vorzugsweise größer als 1,85, vorzugsweise von 2 bis 3. Niedermolekulare Polyetherpolyole können bei entsprechend hohen OH-Gehalten wasserlöslich sein. Besonders bevorzugt sind jedoch wasserunlösliche Polypropylenoxidpolyole und Polytetramethylenoxidpolyole sowie deren Mischungen.

Als besonders geeignet haben sich die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole erwiesen.

Besonders geeignete hydroxyfunktionelle Polyether weisen OH-Funktionalitäten von 1,8 bis 6,0, bevorzugt 2,0 bis 4,0, OH-Zahlen von 50 bis 700, bevorzugt von 100 bis 600 mg KOH/g Feststoff auf, wie beispielsweise Alkoxylierungsprodukte hydroxyfunktioneller Startermoleküle wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid.

Als Komponente C werden erfindungsgemäß Verbindungen eingesetzt, die 1 bis 2 isocyanatreaktive Gruppen sowie wenigstens eine ionogene Gruppen, enthalten und insbesondere als Hydrophilierungsmittel fungieren. Die ionogenen Gruppen können grundsätzlich entweder kationischer oder anionischer Natur sein. Kationisch oder anionisch dispergierend wirkende Verbindungen sind solche, die beispielsweise Sulfonium-, Ammonium-, Phosphonium-, Carboxylat-, Sulfonat-, Phosphonat-Gruppen enthalten oder die Gruppen, die durch Salzbildung in die vorgenannten Gruppen überführt werden können (potentiell ionische Gruppen). Bevorzugt geeignete isocyanatreaktive Gruppen sind Hydroxyl- und Amingruppen.

Geeignete ionische oder potentiell ionische Verbindungen sind beispielsweise Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäwen oder Mono- und Diaminophosphonsäuren und ihre Salze wie Dimethylolpropionsäure, Dimethylolbuttersäure, Hydroxypivalinsäure, 2-(2-Amino- ethylamino)-ethansulfonsäure, Ethylendiaminpropyl- oder Butylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, beispielsweise beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentiell ionische Verbindungen sind solche, die über Carboxy- oder Carboxylat- und/oder Sulfonatgruppen und/oder Ammoniumgruppen verzügen. Besonders bevorzugte ionische Verbindungen sind solche, die Carboxyl- und/oder Sulfonatgruppen als ionische oder potentiell ionische Gruppen enthalten, wie die Salze der 2-(2-Amino-ethyl amino-)ethansulfonsäure oder des Additionsproduktes von IPDI und Acrylsäure (EP-A 0 916 647, Beispiel 1) sowie der Dimethylolpropionsäure.

Als Komponente D werden erfindungsgemäß Polyamine mit einem mittleren Molekulargewicht von mindestens 32 eingesetzt. Die Polyamine fungieren insbesondere als Kettenverlängerer. Unter dem Begriff Polyamine werden erfindungsgemäß sowohl Di- als auch Polyamine im eigentlichen Sinne verstanden. Erfindungsgemäß besonders geeignete Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 4,4-Diaminodicyclohexylmethan, Dimethylethylendiamin, Hydrazin oder Adipinsäuredihydrazid.

Als Komponente D kommen prinzipiell auch Polyamine in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1-methylaminobutan, weiterhin Alkanolamine wie N-Aminoethylethanolamin, Ethanolamin, 3-Aminopropanol oder Neopentanolamin. Bevorzugt sind Diethanolamin und/oder Hydrazin und/oder Isophorondiamin (IPDA) und/oder Ethylendiamin. Besonders bevorzugt sind Hydrazin und/oder Isophorondiamin und/oder Ethylendiamin. Ganz besonders bevorzugt ist eine Mischung aus Hydrazinhydrat und IPDA.

Als Komponente E wird erfindungsgemäß Wasser eingesetzt.

Die Herstellung der im erfindungsgemäßen Verfahren eingesetzten Polyurethanharnstoffe kann nach verschiedenen grundsätzlich im Stand der Technik bekannten Verfahren erfolgen. Als besonders geeignet haben sich die folgenden Verfahren erwiesen:
1. Das so genannte "Acetonverfahren" gemäß der Lehre der DE-OS 1 495 745, US-P 3 479 310, wonach ein NCO-endständiges Präpolymer in der Schmelze hergestellt, in einem geeigneten Lösungsmittel gelöst und in Lösung mit einem Kettenverlängerungsmittel zu einem Polyurethan umgesetzt wird. Nachdem die Lösung des Polyurethans mit Wasser vermischt worden ist, wird die Polyurethan-Dispersion durch Abdestillieren des Lösungsmittels erhalten. Mit diesem Verfahren lassen sich im Wesentlichen lineare Polyurethane aufbauen, da vernetzte Systeme leicht in der organischen Phase gelieren.
2. Ein Verfahren zur Herstellung von Dispersionen auf Polyurethanbasis unter Verwendung blockierter Amine oder Hydrazine als Kettenverlängerungsmittel wird in der DE-OS 2 725 589, US-P 4 269 748, US-P 4 192 937 oder US-P 4 292 226 beschrieben. Hierbei wird ein hyrophiles, endständiges NCO-Gruppen aufweisendes Präpolymer mit zumindest teilweise blockierten Aminen oder Hydrazinen in Abwesenheit von Wasser gemischt und dieses Gemisch anschließend mit Wasser versetzt, wodurch das vorher blockierte Amin oder Hydrazin freigesetzt wird und als Kettenverlängerer des Präpolymeren reagiert. Nach diesem Verfahren können zur Bildung der NCO-endständigen Präpolymere auch aromatische Diisocyanate eingesetzt werden.
3. Eine weitere geeignete Verfahrensweise besteht in der Kettenverlängerung der NCO-endständigen Präpolymere im wässrigen Medium durch Dispergieren der hydrophilen Präpolymere in Wasser und anschließender Zugabe des Kettenverlängerers. Zur Dispersionsbildung kann sowohl das Wasser zum Präpolymeren als auch das Präpolymer zum Wasser gegeben werden. Bei Verwendung von aromatisch gebundenen NCO-Endgruppen ist eine Verkappung dieser Isocyanatgruppen vor der Zugabe von Wasser, wie sie in der US-PS 4 387 181 beschrieben wird, bevorzugt.

Praktische Versuche haben ergeben, dass besonders gute Ergebnisse erzielt werden, wenn das Acetonverfahren (I) zur Herstellung der Polyurethanharnstoffe verwendet wird.

Die Dispergierung der Polyurethane kann grundsätzlich nach beliebigen Verfahren erfolgen. Hierzu zählt beispielsweise die Dispergierung durch Vermischung der Polyurethanschmelzen mit Wasser in Geräten, die hohe Schergefälle erzeugen können. Grundsätzlich können auch geringe Mengen Lösungsmittel zur Plastizifierung bei der Verarbeitung in den genannten Geräten sowie nicht-mechanische Dispergiermittel, wie Schallwellen extrem hoher Frequenz, eingesetzt werden. Es können jedoch auch einfache Mischer, beispielsweise Rührkessel oder so genannte Rücklaufmischer, Verwendung finden, wenn die Polyurethane selbst dispergierbar sind.

Im Allgemeinen werden die Mengen an Ausgangskomponenten A bis E so bemessen, dass anionisch modifizierte Polyurethanharnstoffe mit 5 bis 35, bevorzugt 10 bis 30 mmol anionischer Gruppen/100 g Polyurethanharnstoff und Dispersionen mit einem Feststoffgehalt von 20 bis 60 Gew.% erhalten werden.

Die Funktionalitäten der Komponenten B bis D werden so gewählt, dass sich die anspruchsgemäße mittlere Gesamtfunktionalität ergibt.

In dem erfmdungsgemäßen Verfahren wird der Polyurethanharnstoff in Form einer wässrigen Dispersion eingesetzt. Der Feststoffgehalt der wässrigen Dispersion kann hierbei in weiten Bereichen variiert werden. Besonders gute Ergebnisse werden erhalten, wenn der Feststoffgehalt der wässrigen Dispersion 30 bis 50 Gew.%, insbesondere 35 bis 45 Gew.%, beträgt.

Die wässrige Dispersion kann zusätzlich die üblichen Zusatzstoffe wie Griffhilfsmittel, Pigmente, Farbstoffe, Antioxidantien, insbesondere phenolische Antioxidantien, Hydrophobierungsmittel, Härtungsmittel, Füllmittel, Flammschutzmittel, Verlaufsmittel, oberflächenaktive Verbindungen, Stabilisatoren, insbesondere Lichtstabilisatoren, Biozide und/oder Verdicker enthalten.

In der Formulierung können ferner geeignete Vernetzer, wie insbesondere Polyisocyanate enthalten sein. Besonders geeignete Vernetzer sind aliphatische und/oder aromatische Polyisocyanate und/oder blockierte aromatische Polyisocyanate, welche mindestens zwei NCO-Funktionen, vorzugsweise drei oder mehr NCO-Funktionen, aufweisen. Die blockierten oder nicht-blockierten Polyisocyanate können Lösungsmittelfrei oder als Lösungen eingesetzt werden. Als Blockierungsmittel für die Polyisocyanate kommen Ketoxime, beispielsweise Methylethylketoxim, Diisobutylketoxim, ferner CH- acide Verbindungen, wie Malonester, Acetessigester
oder Phenole wie beispielsweise Phenol, Nonylphenol und andere Blockierungsmittel wie Caprolactam in Frage. Polyisocyanate der genannten Art sind unter anderem biuretisierte, gegebenenfalls uretdionhaltige Polyisocyanate aus aliphatischen oder cycloaliphatischen Diisocyanaten wie Hexandiisocyanat und/oder Isophorondiisocyanat, Cyanurate aus Hexandiisocyanat, Isophorondiisocyanat, Toluylendiisocyanat-2,4/2,6 oder gegebenenfalls Gemische aus solchen Polyisocyanaten oder mischpolymerisierten Polyisocyanaten. Ebenfalls geeignet sind Umsetzungsprodukte aus Trimethylolpropan, Glycerin, Pentaerythrit oder anderen Polyolen im Gemisch mit Dialkoholen wie Diethylenglykol, Butandiol-1,4, Dipropylenglykol und anderen Diolen mit molar überschüssigen Toluylendiisocyanaten, Diphenylmethandiisocyanaten oder ihren Isomerengemischen, ferner Umsetzungsprodukte aus Dialkoholen wie Di- und Triethylenglykol, Di- und Tripopylenglykol mit molar überschüssigen Mengen an Toluylendiisocyanaten oder Diphenylmethandiisocyanaten, einheitlich oder im Gemisch.

Der NCO-Gehalt der Polyisocyanate mit NCO-Gruppen in freier oder blockierter Form liegt vorzugsweise zwischen 5 bis 35 %, noch bevorzugter zwischen 10 bis 20 %. Als Blockierungsmittel sind bevorzugt Butanonoxim, Acetessigsäure-alkylester und/oder Malonsäurealkylester.

Bei Verwendung von Polyurethan-Dispersionen werden als Vernetzer insbesondere NCOblockierte, vorzugsweise
aliphatische, Polyisocyanate verwendet.

Die wässrige anionisch modifizierte Polyurethanharnstoffe enthaltende Dispersion kann über die verschiedensten Verfahren auf das textile Flächengebilde aufgebracht werden. Praktische Versuche haben gezeigt, dass das Auftragen der wässrigen Dispersion besonders vorteilhaft über Direktbeschichtung, Umkehrbeschichtungsverfahren, Laminierung, Sprühen, Tauchen, Drucken, Spritzen und/oder Rakeln erfolgen kann.

Anschließend wird die wässrige Dispersion vorteilhafterweise bei Temperaturen von 70 bis 160°C ausgehärtet und bildet hierbei einen Haftstrich auf dem textilen Flächengebilde aus. Noch bevorzugter findet die Aushärtung in mehreren, vorzugsweise drei Temperaturzonen von etwa 70°C bis 90°C (erste Temperaturzone), 90°C bis 110°C (zweite Temperaturzone) und 140°C bis 160°C (dritte Temperaturzone) statt.

Eine besonders stabile Beschichtung erhält man wenn ein mehrschichtiges Laminat gebildet wird. Aufgrund ihrer hervorragenden haftvermütelnden Wirkung fungiert die aus den anionisch modifizierten Polyurethanharnstoffen gebildete Schicht hierbei zweckmäßigerweise als Haftstrich. Auf der dem textilen Flächengebilde abgewandten Seite des Haftstrichs wird vorzugsweise ein Deckstrich aufgebracht. Noch bevorzugter wird zwischen Deck- und Haftstrich zusätzlich ein Zwischenstrich ausgebildet. Ebenfalls möglich ist ein Verbund aus Vordeck-, Deck- und Haftstrich.

Soll eine Beschichtung aus zwei oder drei Strichen beispielsweise Deck- und Haftstrich, Deck-, Zwischen- und Haftstrich oder Vordeck-, Deck- und Haftstrich, ausgebildet werden, so hat sich die Auftragung mit dem Umkehrbeschichtungsverfahren als ganz besonders geeignet erwiesen. Die Feststoffauflagen pro Strich liegen hierbei im Allgemeinen zwischen 20 und 60 g/m².

Zur Herstellung der Deck-, Vordeck- und Zwischenstrich- Lösungen können die üblichen Polyurethanlösungen, Polyurethandispersionen oder Polyurethanreaktivsysteme, gegebenenfalls auch andere Polymere, beispielsweise PVC, eingesetzt werden.

Zur Herstellung einer Umkehrbeschichtung nach dem erfindungsgemäßen Verfahren trägt man zweckmäßigerweise auf einen einstweiligen Träger, vorzugsweise Trennpapiere oder gegebenenfalls mustertragende Silikonmatrizen, die einzelnen Schichten auf, verfestigt diese durch Trocknen bei erhöhten Temperaturen, zumeist zwischen 90 bis 160°C, und bringt zum Schluss den Haftstrich aus der Polyurethan-Zubereitung, beispielsweise durch Rakeln, auf, beispielsweise in Dicken von 15 bis 50 g/m², vorzugsweise 15 bis 35 g/m² und trocknet diesen ebenfalls, beispielsweise bei Temperaturen bis 100°C, insbesondere bei Temperaturen von 70 bis 90°C, in einer Trockenkanalpassage.

Das textile Substrat (beispielsweise Vliese, Gewirke, Gewebe, gefüllte Vliese, vorzugsweise mit mikroporös ausgebildeten Koagulaten gefüllte Vliese) wird zweckmäßigerweise unter Walzenandruck an einen Zylinder mit dem trockenen Haftstrich kaschiert und anschließend thermisch bei Temperaturen bis etwa 180°C, vorzugsweise 120 bis 160°C, vernetzt. Nach Entfernung des Trennpapiers liegt das beschichtete Material vor.

Mit einer Umkehrbeschichtung können beispielsweise unter Verwendung von Silikonmatrizen und einer geeigneten Temperaturführung besonders einfach veloursartige Beschichtungen hergestellt werden.

Wie schon erwähnt, können die erfindungsgemäßen Polyurethansuspensionen aber auch im Direktstreichverfahren unmittelbar auf das textile Substrat aufgebracht werden. Mit Auftragsmengen von etwa 50 bis 200 g/m² können auf diese Weise, je nach Anwendungszweck, beispielsweise Sportbekleidung- oder Planenbeschichtung, Förderbänder, Schwimmwesten usw. mit unterschiedlich dicken Beschichtungen hergestellt werden.

Ein weiterer Gegenstand der vorliegenden Erfindung ist die Verwendung einer wässrigen Dispersion, enthaltend anionisch modifizierte Polyurethanharnstoffe aus
A. aromatischem Diisocyanat,
B. Polyetherpolyol mit einem mittleren Molekulargewicht größer als 1500,
C. wenigstens einer 1 bis 2 isocyanatreaktive Gruppen sowie wenigstens eine ionogene Gruppe aufweisenden Verbindung,
D. Polyamin mit einem mittleren Molekulargewicht von mindestens 32 sowie
E. Wasser,
wobei die mittlere Gesamtfunktionalität der isocyanatreaktiven Verbindungen B bis D 1,85 bis 2,2 beträgt, das Molverhältnis der Isocyanatgruppen der Komponente A zu den isocyanatreaktiven Gruppen der Komponenten B bis D größer als 1 ist und die Polyurethanharnstoffe einen Gehalt von 800 bis 1500 mmol Urethangruppen/kg anionisch modifiziertem Polyurethanharnstoff und einen Gehalt von 800 bis 1800 mmol Urethan- plus Harnstoffgruppen/kg anionisch modifiziertem Polyurethanharnstoff besitzen, zur Beschichtung eines textilen Flächengebildes.

Hervorragende Beschichtungsergebnisse werden erzielt, wenn die wässrige Dispersion in einem der oben beschriebenen Verfahren eingesetzt wird.

Nachfolgend wird die Erfindung anhand zweier Ausführungsbeispiele näher erläutert.

### Ausführungsbeispiel 1

Entsprechend dem Beispiel 3 der EP 0 581 159 B1 wird eine wässrige Dispersion enthaltend anionisch modifizierte Polyurethanharnstoffe hergestellt. Hierzu werden 1,380 g eines Polypropylenoxiddiols (OH-Z = 56) und 65 g Dimethylolpropionsäure 60 Minuten bei 110°C und 15 mbar entwässert. Bei 90°C werden 266 g eines 35:65-Gemischs aus 2,6- und 2,4-Toluylendiisocyanat zugegeben. Nach 5 Stunden ist ein Isocyanatgehalt von 1,55 % erreicht. Es wird mit 3.300 g Aceton verdünnt. zu der acetonischen Lösung gibt man bei 55 bis 65°C 12,25 g Ethylendiamin in 160 g Wasser zu. Anschießend wird mit 35 g Triethylamin neutralisiert und mit 4.0 g Wasser versetzt. Nach destillativer Entfernung des Acetons erhält man eine feinteilige Dispersion mit folgenden Daten:

| 30,5 Gew.% Feststoff | |
|---|---|
| pH = | 7,7 |
| Urethangruppen: | 1335 mmol/kg |
| Harnstoffgruppen: | 332,00 mmol/kg |
| Summe: | 1667 mmol/kg |

Das Produkt weist eine Shore A Härte von 49 auf, es ist in THF vollständig löslich (klare Lösung) und besitzt eine Viskosität in THF von 17 s.

### Ausführungsbeispiel 2

Ein textiler Träger einer Baumwoll-Polyestermischung wird im Umkehrbeschichtungsverfahren mit einem aus dieser Dispersion hergestellten Haftstrich, einem auf dem Haftstrich angeordneten Zwischenstrich, einem auf dem Zwischenstrich angeordneten Deckstrich sowie einem Finishstrich belegt.

Das auf diese Weise erhaltene Laminat wird im Hinblick auf Nasshaftung und Trockenhaftung untersucht und mit Laminaten gleichen Aufbaus verglichen, deren Haftstriche unter Verwendung lösemittelhaltiger Polyurethanlösungen oder einer in der Textilbeschichtung herkömmlichen wässrigen Dispersion (Impranil DLU) hergestellt wurden. Das Impranil DLU ist eine aliphatische Dispersion, die sich hinsichtlich ihrer Aufbaukomponenten, dem Anteil Urethan- und Harnstoffgruppen und der Hydrophilierung maßgeblich von der erfindungsgemäßen Dispersion unterscheidet.

Zur Herstellung der Laminate werden die in Tabelle 1 angegebenen Produkte eingesetzt.

| **Produkte** | **Definition** |
|---|---|
| Impranil EWN 13, Bayer AG, Leverkusen | Polyurethanharnstoff gelöst in DMF, MEK, Toluol |
| Impranil DLU, Bayer AG, Leverkusen | wässrige Polyurethanharnstoffdispersion |
| Desmodur XP 2410, Bayer AG, Leverkusen | aliphatisches Polyisocyanat |
| Imprafix TH Lösung, Bayer AG, Leverkusen | aromatisches Polyisocyanat |
| Bayderm Schwarz B, Bayer AG, Leverkusen | Farbpigment |
| Euderm Schwarz B, Bayer AG, Leverkusen | Farbpigment |
| Borchigel ALA, Borchers, Dormagen | Verdicker auf Acrylatbasis |

| **Produkte** | **Definition** |
|---|---|
| Impranil LP RSC 1997, Bayer AG, Leverkusen | aliphatische Polyurethandispersion |
| Euderm Farbmischung, | 92,5 Gew.% Euderm Weiss CG-N, 6,5 Gew.% Karamel C-N, 0,5 Gew.% Euderm Schwarz C-N, 3,0 Gew.% Euderm Dunkelbraun C-N (jew. Lanxess AG, Leverkusen) |
| Impranil HS-80, Bayer AG, Leverkusen | Lösemittel haltiges Präpolymer mit blockierten Isocyanatgruppen |
| Verlaufsmischung | Baysilon ÖL17 Lackadditiv, Lanxess, Leverkusen, Acronal 700 S, Polyacrylat, BASF AG, Ludwigshafen und Tinuvin B75, Blend eines Licht- und Oxidationsschutzmittels, Ciba AG, Basel |
| Arbocel BE 30/600, Rettenmeier, Deutschland | Cellulosepulver |
| Imprafix VP LS 2330, Bayer AG, Leverkusen | Polyamin zur Vernetzung |
| Mirox AM, Stockhausen, Krefeld | Acrylatverdicker |
| Acrafix ML, Lanxess, Leverkusen | Melaminharz |

| | |
|---|---|
| Tabelle 1 | |

### Herstellung und Zusammensetzung der einzelnen Striche

Die Beschichtungen werden auf einer 1 Strich Beschichtungsanlage der Firma ISOTEX im Transferverfahren hergestellt.

### a) Finish

Tabelle 2 zeigt die Zusammensetzung der Finishstriche, die zur Herstellung der Laminate 1 bis 6 eingesetzt wurden.

**Tabelle 2**

| **Finish** | **Laminat 1** | **Laminat 2** | **Laminat 3 *** | **Laminat 4** | **Laminat 5** | **Laminat 6 *** |
|---|---|---|---|---|---|---|
| Impranil LP RSC 1997 | 1000 | 1000 | 1000 | 1000 | 1000 | 1000 |
| Borchigel ALA | 20 | 20 | 20 | 20 | 20 | 20 |
| Desmodur XP 2410 | 20 | 20 | 20 | 20 | 20 | 20 |

| | | | | | | |
|---|---|---|---|---|---|---|
| (*erfindungsgemäß) | | | | | | |

Impranil LP RSC 1997 wird in einem Behälter vorgelegt und mit Borchigel ALA unter Rühren auf Streichviskosität verdickt, unter Rühren wird Desmodur XP 2410 zugegeben und homogen eingearbeitet. Die Beschichtung erfolgt mit einer Laufgeschwindigkeit von 2,0 m/min bei einem Rakelspalt von 0,04 mm und einem Feststoff von 18 g/m². Die Trocknung erfolgt in drei Temperaturzonen von 80°C, 100°C und 150°C innerhalb von vier Minuten.

### b) Deckstrich

Tabelle 3 zeigt die Zusammensetzung der Deckstriche, die zur Herstellung der Laminate 1 bis 6 eingesetzt wurden.

**Tabelle 3**

| **Deckstrich** | **Laminat 1** | **Laminat 2** | **Laminat 3 *** | **Laminat 4** | **Laminat 5** | **Laminat 6 *** |
|---|---|---|---|---|---|---|
| Impranil DLU Dispersion | 1000 | 1000 | 1000 | 1000 | 1000 | 1000 |
| Euderm Farben-mischung | 120 | 120 | 120 | 120 | 120 | 120 |
| Borchigel ALA | 20 | 20 | 20 | 20 | 20 | 20 |

| | | | | | | |
|---|---|---|---|---|---|---|
| (*erfindungsgemäß) | | | | | | |

Impranil DLU Dispersion wird in einem Behälter vorgelegt, die Euderm Farbenmischung wird unter Rühren zugegeben und mit Borchigel ALA unter Rühren auf Streichviskosität verdickt und homogen eingearbeitet. Die Beschichtung erfolgt mit einer Laufgeschwindigkeit von 2,0 m/min bei einem Rakelspalt von 0,07 mm und einem Feststoff von 40 g/m². Die Trocknung erfolgt in drei Temperaturzonen von 80°C, 100°C und 150°C innerhalb von vier Minuten.

### c) Zwischenstrich

Tabelle 4 zeigt die Zusammensetzung der Zwischenstriche, die zur Herstellung der Laminate 1 bis 6 eingesetzt wurden.

**Tabelle 4**

| **Zwischenstrich** | **Laminat 1** | **Laminat 2** | **Laminat 3 *** | **Laminat 4** | **Laminat 5** | **Laminat 6 *** |
|---|---|---|---|---|---|---|
| Impranil HS - 80 | 1000 | 1000 | 1000 | | | |
| Bayderm Weiß CG-N | 100 | 100 | 100 | | | |
| Verlaufsmittelmischung | 25 | 25 | 25 | | | |
| Arbocel BE 30/600 | 50 | 50 | 50 | | | |
| Imprafix VP LS 2330 | 70 | 70 | 70 | | | |
| Impranil DLU Dispersion | | | | 1000 | 1000 | 1000 |
| Eiderm Weiß CG-N | | | | 100 | 100 | 100 |
| Mirox AM | | | | X | X | X |
| Ammoniaklösung, conc. bis pH 8-9 | | | | X | X | X |
| Acrafix ML | | | | 25 | 25 | 25 |

| | | | | | | |
|---|---|---|---|---|---|---|
| (*erfindungsgemäß) | | | | | | |

Zur Herstellung der Zwischenstriche für die Vergleichslaminate 1 und 2 sowie für das erfindungsgemäße Laminat 3 wird Impranil HS - 80 in einem Behälter vorgelegt, danach werden unter Rühren Verlaufsmittelmischung, Arbocel BE 30 / 600, Bayderm Weiß CG-N und Imprafix VP LS 2330 zugegeben und homogen eingearbeitet. Die homogene Mischung wird über einen Dreiwalzenstuhl abgemahlen und anschließend in einem Entlüftungsgerät von Luftblasen befreit. Die Beschichtung erfolgt mit einer Laufgeschwindigkeit von 2,0 m/min bei einem Rakelspalt von 0,40 mm und einem Feststoff von 267 g/m². Die Trocknung erfolgt in drei Temperaturzonen von 160°C, 160°C und 150°C innerhalb von vier Minuten

Zur Herstellung des Zwischenstrichs für die Vergleichslaminate 4 und 5 sowie fiir das Laminat 6 wird Impranil DLU Dispersion in einem Behälter vorgelegt, danach werden unter Rühren Euderm Weiß CG-N, Acrafix ML und Ammoniaklösung conc. bis pH 8-9 zugegeben und mit Mirox AM auf Streichviskosität verdickt. Die Beschichtung erfolgt mit einer Laufgeschwindigkeit von 1,5 m/min bei einem Rakelspalt von 0,50 mm und einem Feststoff von 280 g/m². Die Trocknung erfolgt in drei Temperaturzonen von 70°C, 90°C und 130°C.

### d) Haftstrich

Tabelle 5 zeigt die Zusammensetzung der Haftstriche, die zur Herstellung der Laminate 1 bis 6 eingesetzt wurden.

**Tabelle 5**

| **Haftstrich** | **Laminat 1** | **Laminat 2** | **Laminat 3 *** | **Laminat 4** | **Laminat 5** | **Laminat 6 *** |
|---|---|---|---|---|---|---|
| Impranil EWN 13 | 1000 | | | 1000 | | |
| Imprafix TH Lösung | 20 | | | 20 | | |

| **Haftstrich** | **Laminat 1** | **Laminat 2** | **Laminat 3 *** | **Laminat 4** | **Laminat 5** | **Laminat 6 *** |
|---|---|---|---|---|---|---|
| Bayderm Schwarz B | 20 | | | 20 | | |
| Impranil DLU Dispersion | | 1000 | | | 1000 | |
| Haftstrich aus Ausf.-beisp. 1 | | | 1000 | | | 1000 |
| Euderm Schwarz B | | 20 | 20 | | 20 | 20 |
| Borchigel ALA | | 30 | 20 | | 30 | 20 |
| Desmodur XP 2410 | | 20 | 20 | | 20 | 20 |

| | | | | | | |
|---|---|---|---|---|---|---|
| (*erfindungsgemäß) | | | | | | |

Zur Herstellung des Haftstrichs für die Vendeichslaminate 1 und 4 wird Impranil EWN 13 in einem Behälter vorgelegt, danach werden unter Rühren Imprafix TH Lösung und Bayderm Schwarz B homogen eingearbeitet. Die Beschichtung erfolgt mit einer Laufgeschwindigkeit von 2,0 m/min bei einem Rakelspalt von 0,15 mm und einem Feststoff von 40 g/m². Die Trocknung erfolgt in drei Temperaturzonen von 80°C, 100°C und 150°C innerhalb von vier Minuten.

Zur Herstellung des Haftstrichs für die Vergleichslaminate 2 und 5 wird Impranil DLU Dispersion in einem Behälter vorgelegt, danach werden unter Rühren Euderm Schwarz B zugegeben und mit Borchigel ALA unter Rühren auf Streichviskosität verdickt, danach wird unter Rühren Desmodur XP 2410 zugegeben und homogen eingearbeitet. Die Beschichtung erfolgt mit einer Laufgeschwindigkeit von 2,0 m/min bei einem Rakelspalt von 0,11 mm und einem Feststoff von 40 g/m². Die Trocknung erfolg14t in drei Temperaturzonen von 80°C, 100°C und 150°C innerhalb von vier Minuten

Zur Herstellung des Haftstrichs für die erfindungsgemäßen Laminate 3 und 6 wird die Polyurethanlösung aus Ausführungsbeispiel 1 in einem Behälter vorgelegt, danach werden unter Rühren Euderm Schwarz B zugegeben und mit Borchigel ALA unter Rühren auf Streichviskosität verdickt, danach wird unter Rühren Desmodur XP 2410 zugegeben und homogen eingearbeitet. Die Beschichtung erfolgt mit einer Laufgeschwindigkeit von 2,0 m/min bei einem Rakelspalt von 0,15 mm und einem Feststoff von 40 g/m². Die Trocknung erfolgt in drei Temperaturzonen von 80°C, 100°C und 150°C innerhalb von vier Minuten

### Ergebnisse

Trockenhaftung und Nasshaftung der wie oben dargestellten Laminate wird mit einem Gerät des Typs Z 1.0/THIS der Firma Zwick untersucht. Die Prüfung erfolgt an Probenkörpern der Größe 200 mm x 15 mm mit einer Zuggeschwindigkeit von 100 mm pro Minute. Dazu wird ein mit der Beschichtung ausgerüsteter Baumwollsteifen auf die Prüffläche bei einer Temperatur von 180°C gleichmäßig aufgebügelt, bis eine Verklebung bzw. Verschmelzung erkennbar ist. Vor der Prüfung wird der Probekörper mindestens 24 h ausreagieren gelassen.

Die Ergebnisse sind in Tabelle 6 dargestellt.

**Tabelle 6**

| **Haftstrich** | **Laminat 1** | **Laminat 2** | **Laminat 3 *** | **Laminat 4** | **Laminat 5** | **Laminat 6 *** |
|---|---|---|---|---|---|---|
| Haftung trocken [N / 2,5 cm | 26 | 20 | 26 | 17 | 16 | 28 |
| Haftung nass / [N / 2,5 cm] | 12 | 17 | 20 | 14 | 14 | 18 |

| | | | | | | |
|---|---|---|---|---|---|---|
| (*erfindungsgemäß) | | | | | | |

Wie man erkennt, weisen nur die erfindungsgemäßen Laminate 3 und 6 ausreichende Haftungswerte im Vergleich zum lösemittelhaltigen Standard (Vergleichslaminate 1 und 4) auf.

## Patentansprüche

1. Verfahren zum Beschichten textiler Flächengebilde, **dadurch gekennzeichnet, dass** eine wässrige Dispersion enthaltend anionisch modifizierte Polyurethanharnstoffe aus
A. aromatischem Diisocyanat,
B. Polyetherpolyol mit einem mittleren Molekulargewicht größer als 1500,
C. wenigstens einer 1 bis 2 isocyanatreaktive Gruppen sowie wenigstens eine ionogene Gruppe aufweisenden Verbindung,
D. Polyamin mit einem mittleren Molekulargewicht von mindestens 32 sowie
E. Wasser,
wobei die mittlere Gesamtfunktionalität der isocyanatreaktiven Verbindungen B bis D 1,85 bis 2,2 beträgt, das Molverhältnis der Isocyanatgruppen der Komponente A zu den isocyanatreaktiven Gruppen der Komponenten B bis D größer als 1 ist und die Polyurethanharnstoffe einen Gehalt von 800 bis 1500 mmol Urethangupper//kg anionisch modifiziertem Polyurethanharnstoff und einen Gehalt von 800 bis 1800 mmol Urethan- plus Harnstoffgruppen/kg anionisch modifiziertem Polyurethanharnstoff besitzen, auf ein textiles Flächengebilde aufgebracht wird.

2. Verfahren nach Anspruch 1, **dadurch gekennzeichnet, dass** Polyurethanhamstoffe, die 1200 bis 1750 mmol Urethan- plus Harnstoffgruppen/kg anionisch modifiziertem Polyurethanharnstoff aufweisen, eingesetzt werden.

3. Verfahren nach Anspruch 1 oder 2, **dadurch gekennzeichnet, dass** Polyurerhanharnstoffe, die mehr als 150 mmol Harnstoffguppen/kg anionisch modifiziertem Polyurethanharnstoff aufweisen, eingesetzt werden.

4. Verfahren nach einem der Ansprüche 1 bis 3, **dadurch gekennzeichnet, dass** Polyurethanharnstoffe, die mehr als 200 mmol Harnstoffgruppen/kg anionisch modifiziertem Polyurethanharnstoff aufweisen, eingesetzt werden.

5. Verfahren nach einem der Ansprüche 1 bis 4, **dadurch gekennzeichnet, dass** Polyurethanhamstoffe, in denen das Molverhältnis der Isocyanatgruppen der Komponente A zu den isocyanatreaktiven Gruppen der Komponenten B bis D größer als 1,05 ist, eingesetzt werden.

6. Verfahren nach einem der Ansprüche 1 bis 5, **dadurch gekennzeichnet, dass** Polyurethanharnstoffe, die eine Shore A-Härte von maximal 60 aufweisen, eingesetzt werden.

7. Verfahren nach einem der Ansprüche 1 bis 6, **dadurch gekennzeichnet, dass** eine wässrige Dispersion mit einem Feststoffgehalt von 30 bis 50 Gew.%, vorzugsweise von 35 bis 45 Gew.%, eingesetzt wird.

8. Verfahren nach einem der Ansprüche 1 bis 7, **dadurch gekennzeichnet, dass** die wässrige Dispersion bei Temperaturen von 70°C bis 160°C ausgehärtet wird und einen Haftstrich ausbildet.

9. Verfahren nach einem der Ansprüche 1 bis 8, **dadurch gekennzeichnet, dass** auf der dem textilen Flächengebilde abgewandten Seite des Haftstrichs ein Deckstrich aufgebracht wird.

10. Verfahren nach einem der Ansprüche 1 bis 9, **dadurch gekennzeichnet, dass** die wässrige Dispersion über Direktbeschichtung, Umkehrbeschichtung, Laminierung, Sprühen, Tauchen, Drucken, Spritzen und/oder Rakeln auf das textile Flächengebilde aufgebracht wird.

11. Verfahren nach einem der Ansprüche 1 bis 10, **dadurch gekennzeichnet, dass** eine wässrige Dispersion mit einem Feststoffgehalt von 30 bis 50 Gew.%, vorzugsweise von 35 bis 45 Gew.%, eingesetzt wird.

12. Verfahren nach einem der Ansprüche 1 bis 11, **dadurch gekennzeichnet, dass** eine wässrige Dispersion, die zusätzlich Vernetzungs- und/oder Härtungsmittel, Füllmittel, Flammschutzmittel, Verlaufsmittel, oberflächenaktive Verbindungen, Stabilisatoren, Biozide und/oder Verdicker enthält, aufgebracht wird.

13. Verfahren nach einem der Ansprüche 1 bis 12, **dadurch gekennzeichnet, dass** eine Webware, ein Vliesstoff oder eine Maschenware als textiles Flächengebilde eingesetzt wird.

14. Verwendung einer wässrigen Dispersion, enthaltend anionisch modifizierte Polyurethanharnstoffe aus
A. aromatischem Diisocyant,
B. Polyetherpolyol mit einem mittleren Molekulargewicht größer als 1500,
C. wenigstens einer 1 bis 2 isocyanatreaktive Gruppen sowie wenigstens eine ionogene Gruppe aufweisenden Verbindung,
D. Polyamin mit einem mittleren Molekulargewicht von mindestens 32 sowie
E. Wasser,
wobei die mittlere Gesamtfunktionalität der isocyanatreaktiven Verbindungen B bis D 1,85 bis 2,2 beträgt, das Molverhältnis der Isocyanatgruppen der Komponente A zu den isocyanatreaktiven Gruppen der Komponenten B bis D größer als 1 ist und die Polyurethanharnstoffe einen Gehalt von 800 bis 1500 mmol Urethangruppen/kg anionisch modifiziertem Polyurethanharnstoff und einen Gehalt von 800 bis 1800 mmol Urethan- plus Harnstoffgruppen/kg anionisch modifiziertem Polyurethanharnstoff besitzen, zur Beschichtung eines textilen Flächengebildes.

15. Verwendung nach Anspruch 14 in einem Verfahren nach einem der Ansprüche 1 bis 13.

## Claims

1. A process for coating textile fabrics, **characterized in that** an aqueous dispersion comprising anionically modified polyurethaneureas formed from
A. aromatic diisocyanate,
B. polyether polyol having an average molecular weight greater than 1500,
C. at least one compound having 1 to 2 isocyanate-reactive groups and also at least one ionogenic group,
D. polyamine having an average molecular weight of at least 32, and also
E. water,
wherein the average overall functionality of the isocyanate-reactive compounds B to D is in the range from 1.85 to 2.2, the molar ratio of the isocyanate groups of component A to the isocyanate-reactive groups of components B to D is greater than 1, and the polyurethaneureas contain from 800 to 1500 mmol of urethane groups/kg of anionically modified polyurethaneurea and from 800 to 1800 mmol of urethane plus urea groups/kg of anionically modified polyurethaneurea, is applied to a textile fabric.

2. The process according to claim 1, **characterized in that** polyurethaneureas having from 1200 to 1750 mmol of urethane plus urea groups/kg of anionically modified polyurethaneurea are used.

3. The process according to claim 1 or 2, **characterized in that** polyurethaneureas having more than 150 mmol of urea groups/kg of anionically modified polyurethaneurea are used.

4. The process according to any one of claims 1 to 3, **characterized in that** polyurethaneureas having more than 200 mmol of urea groups/kg of anionically modified polyurethaneurea are used.

5. The process according to any one of claims 1 to 4, **characterized in that** polyurethaneureas in which the molar ratio of the isocyanate groups of component A to the isocyanate-reactive groups of components B to D is greater than 1.05 are used.

6. The process according to any one of claims 1 to 5, **characterized in that** polyurethaneureas having a Shore A hardness of not more than 60 are used.

7. The process according to any one of claims 1 to 6, **characterized in that** an aqueous dispersion having a solids content of from 30% to 50% by weight and preferably of from 35% to 45% by weight is used.

8. The process according to any one of claims 1 to 7, **characterized in that** the aqueous dispersion is cured at temperatures of from 70°C to 160°C to form a tie coat.

9. The process according to any one of claims 1 to 8, **characterized in that** a topcoat is applied to that side of the tie coat which faces away from the textile fabric.

10. The process according to any one of claims 1 to 9, **characterized in that** the aqueous dispersion is applied to the textile fabric via direct coating, transfer coating, lamination, spraying, dipping, printing, jetting and/or blade coating.

11. The process according to any one of claims 1 to 10, **characterized in that** an aqueous dispersion having a solids content of from 30% to 50% by weight and preferably of from 35% to 45% by weight is used.

12. The process according to any one of claims 1 to 11, **characterized in that** an aqueous dispersion further comprising crosslinking and/or curing agents, fillers, flame retardants, flow control agents, surface-active compounds, stabilizers, biocides and/or thickeners is applied.

13. The process according to any one of claims 1 to 12, **characterized in that** the textile fabric used is a woven fabric, a nonwoven fabric or a knitted fabric.

14. The use of an aqueous dispersion comprising anionically modified polyurethaneureas formed from
A. aromatic diisocyanate,
B. polyether polyol having an average molecular weight greater than 1500,
C. at least one compound having 1 to 2 isocyanate-reactive groups and also at least one ionogenic group,
D. polyamine having an average molecular weight of at least 32, and also
E. water,
wherein the average overall functionality of the isocyanate-reactive compounds B to D is in the range from 1.85 to 2.2, the molar ratio of the isocyanate groups of component A to the isocyanate-reactive groups of components B to D is greater than 1, and the polyurethaneureas contain from 800 to 1500 mmol of urethane groups/kg of anionically modified polyurethaneurea and from 800 to 1800 mmol of urethane plus urea groups/kg of anionically modified polyurethaneurea, for coating a textile fabric.

15. The use according to claim 14 in a process according to any one of claims 1 to 13.

## Revendications

1. Procédé pour l'enduction d'une structure plate textile, **caractérisé en ce qu'**on applique sur une structure plate textile une dispersion aqueuse contenant des polyuréthane-urées à modification anionique, à base de
A. diisocyanate aromatique,
B. polyétherpolyol ayant une masse moléculaire moyenne supérieure à 1 500,
C. au moins un composé comportant 1 à 2 groupes réactifs avec des isocyanates ainsi qu'au moins un groupe ionogène,
D. polyamine ayant une masse moléculaire moyenne d'au moins 32 ainsi que
E. eau,
la fonctionnalité totale moyenne des composés B à D réactifs avec des isocyanates valant de 1,85 à 2,2, le rapport molaire des groupes isocyanate du composant A aux groupes réactifs avec des isocyanates des composants B à D étant supérieure à 1 et les polyuréthane-urées ayant une teneur de 800 à 1 500 mmoles en groupes uréthane par kg de polyuréthane-urée à modification anionique et une teneur de 800 à 1 800 mmoles en groupes uréthane plus urée par kg de polyuréthane-urée à modification anionique.

2. Procédé selon la revendication 1, **caractérisé en ce qu'**on utilise des polyuréthanne-urées qui comportent de 1 200 à 1 750 mmoles de groupes uréthane plus urée par kg de polyuréthane-urée à modification anionique.

3. Procédé selon la revendication 1 ou 2, **caractérisé en ce qu'**on utilise des polyuréthanne-urées qui comportent plus de 150 mmoles de groupes urée par kg de polyuréthane-urée à modification anionique.

4. Procédé selon l'une quelconque des revendications 1 à 3, **caractérisé en ce qu'**on utilise des polyuréthanne-urées qui comportent plus de 200 mmoles de groupes urée par kg de polyuréthane-urée à modification anionique.

5. Procédé selon l'une quelconque des revendications 1 à 4, **caractérisé en ce qu'**on utilise des polyuréthane-urées dans lesquelles le rapport molaire des groupes isocyanate du composant A aux groupes réactifs avec des isocyanates des composants B à D est supérieur à 1,05.

6. Procédé selon l'une quelconque des revendications 1 à 5, **caractérisé en ce qu'**on utilise des polyuréthane-urées qui présentent une dureté Shore A d'au maximum 60.

7. Procédé selon l'une quelconque des revendications 1 à 6, **caractérisé en ce qu'**on utilise une dispersion aqueuse ayant une teneur en matière solide de 30 à 50 % en poids, de préférence de 35 à 45 % en poids.

8. Procédé selon l'une quelconque des revendications 1 à 7, **caractérisé en ce que** la dispersion aqueuse est durcie complètement à des températures de 70 °C à 160 °C et forme une couche adhésive.

9. Matière de revêtement selon l'une quelconque des revendications 1 à 8, **caractérisée en ce qu'**on applique une couche de recouvrement sur la face de la couche adhésive opposée à la structure plate textile.

10. Procédé selon l'une quelconque des revendications 1 à 9, **caractérisé en ce qu'**on applique la dispersion aqueuse sur la structure plate textile par enduction directe, enduction inverse, contrecollage, pulvérisation, trempage, impression, projection et/ou enduction à la racle.

11. Procédé selon l'une quelconque des revendications 1 à 10, **caractérisé en ce qu'**on utilise une dispersion aqueuse ayant une teneur en matière solide de 30 à 50 % en poids, de préférence de 35 à 45 % en poids.

12. Procédé selon l'une quelconque des revendications 1 à 11, **caractérisé en ce qu'**on applique une dispersion aqueuse qui contient des agents de réticulation et/ou des durcisseurs, charges, agents ignifuges, agents d'étalement, composés tensioactifs, stabilisants, biocides et/ou épaississants.

13. Procédé selon l'une quelconque des revendications 1 à 12, **caractérisé en ce qu'**on utilise comme structure plate textile un tissu, un non-tissé ou un tissu à mailles.

14. Utilisation d'une dispersion aqueuse contenant des polyuréthane-urées à modification anionique, à base de
A. diisocyanate aromatique,
B. polyétherpolyol ayant une masse moléculaire moyenne supérieure à 1 500,
C. au moins un composé comportant 1 à 2 groupes réactifs avec des isocyanates ainsi qu'au moins un groupe ionogène,
D. polyamine ayant une masse moléculaire moyenne d'au moins 32 ainsi que
E. eau,
la fonctionnalité totale moyenne des composés B à D réactifs avec des isocyanates valant de 1,85 à 2,2, le rapport molaire des groupes isocyanate du composant A aux groupes réactifs avec des isocyanates des composants B à D étant supérieure à 1 et les polyuréthane-urées ayant une teneur de 800 à 1 500 mmoles en groupes uréthane par kg de polyuréthane-urée à modification anionique et une teneur de 800 à 1 800 mmoles en groupes uréthane plus urée par kg de polyuréthane-urée à modification anionique, pour l'enduction d'une structure plate textile.

15. Utilisation selon la revendication 14, dans un procédé selon l'une quelconque des revendications 1 à 13.
